# FASCICULE DE BREVET EUROPEEN

(11) **EP 1 862 378 B1**
(45) Date de publication et mention de la délivrance du brevet: **28.12.2011**
(21) Numéro de dépôt: 07300988.8
(22) Date de dépôt: 26.04.2007
(51) Int. Cl.: B62D 21/15, B62D 25/20

(54) **Véhicule automobile équipé de moyens améliorés de limitation de l'intrusion d'une latérale du véhicule lors d'un choc latéral subi par le véhicule**
Kraftfahrzeug, das mit verbesserten Mitteln zur Begrenzung der lateralen Eindringmöglichkeiten bei seitlichem Aufprall auf das Kraftfahrzeug ausgestattet ist.
Automobile equipped with improved means for restricting intrusion on one side of the vehicle in the event of the vehicle suffering a lateral impact

(30) Priorité: 29.05.2006 FR 0651934
(43) Date de publication de la demande: 05.12.2007
(73) Titulaire: PEUGEOT CITROËN AUTOMOBILES S.A., 78140 Vélizy Villacoublay (FR)
(72) Inventeur: Villedieu, Christophe, 91310 LONGPONT SUR ORGE (FR); Plumere, Laurence, 90000 BELFORT (FR)

(56) Documents cités:
- DE-A1- 4 020 745
- JP-A- 2000 238 666

## Description

La présente invention concerne un véhicule automobile équipé de moyens de limitation de l'intrusion d'une porte latérale à l'intérieur de l'habitacle du véhicule lors d'un choc latéral subi par le véhicule.

Un véhicule de ce type, connu du document FR2834491, est conçu pour assurer la protection des occupants lors d'un choc latéral en limitant au maximum la déformation de la porte subissant ce choc, et ainsi l'intrusion de cette porte dans l'habitacle du véhicule.

Dans ce véhicule, les moyens de limitation sont constitués par un pointeau fixé au longeron et par un orifice réalisé dans la doublure de la porte, en regard du pointeau du longeron dans la position de fermeture de la porte. Lors d'un choc latéral, le pointeau s'insère dans l'orifice de la porte et verrouille le bas de cette porte au longeron du véhicule, de façon à empêcher l'intrusion de la porte au sein de l'habitacle du véhicule.

Cependant, ce type de moyens de limitation ne permet pas de garantir que la porte soit suffisamment retenue lors d'un choc latéral.

Il est aussi connu de JP2000238666 un longeron, tel que décrit par le préambule de la revendication 1, formant un seuil de porte conformé de façon à augmenter la rigidité de l'assemblage soudé des différentes pièces constitutives dudit longeron, en cas de choc latéral. Pour ce faire, le longeron comprend un profilé sur lequel sont soudées des plaques de renfort rendant apte l'écrasement du profilé et de la peau extérieure du longeron sans pour autant améliorer la retenue de la porte lors d'un choc latéral.

Le but de l'invention est de remédier à cet inconvénient.

A cet effet, l'invention concerne un véhicule automobile comprenant un longeron inférieur ayant une partie supérieure, couverte par le bas d'une porte du véhicule lorsque cette porte est fermée et définissant avec le bas de porte une zone de recouvrement, le longeron étant pourvu d'un profilé, dit de retenue de la porte, définissant au moins une face oblique terminée par une arête située en vis-à-vis du bas de porte lorsque cette porte est fermée, de telle manière qu'un choc latéral appliqué sur la porte tend à déformer le profilé en rabattant la face oblique, le longeron (3) comprenant en outre une peau externe (13) fermée par une plaque interne (12), un renfort intérieur (14) interposé entre la peau externe (13) et la plaque interne (12).

Selon l'invention, le profilé de retenue (22) est porté par le renfort intérieur (14) de sorte que la face oblique (23) est inclinée vers la porte (2) dans un état non déformé du profilé, et que la face oblique (23) est apte à être rabattue dans un plan sensiblement vertical lors de la déformation du profilé (23), pour augmenter la hauteur de la zone de recouvrement de la partie supérieure du longeron avec la porte

Selon une autre caractéristique, le profilé présente en section transversale une forme en V, chaque branche du V ayant une extrémité fixée au renfort intérieur.

Avantageusement, l'arête du profilé a, en section transversale, une forme de crochet.

De préférence, le bas de porte comprend une cavité de réception de l'arête du profilé de retenue.

Selon une autre caractéristique, la cavité de réception comprend un renfort longitudinal réalisé en un matériau sensiblement plus rigide que les matériaux constitutif du profilé et du longeron, destiné à transmettre des efforts généré par un choc latéral subi par le véhicule à l'ensemble profilé et longeron.

Dans ce cas, le renfort de la cavité est constitué par une pièce de tôlerie définissant une zone angulaire de réception du profilé, cette pièce comprenant des parties embouties permettant de maintenir l'ouverture de la zone angulaire lors d'un choc latéral subi par le véhicule.

De préférence, le bas de porte comprend une lame longitudinale située en dessous du renfort de la cavité, présentant une rigidité moindre que la rigidité du renfort, de façon à s'appliquer sous l'arête du profilé lors d'un choc latéral subi par le véhicule.

L'invention sera maintenant décrite plus en détail, et en référence aux dessins annexés qui en illustrent une forme de réalisation à titre d'exemple non limitatif, parmi lesquels :
- la figure 1 est une vue partielle en coupe transversale d'un véhicule automobile selon l'invention comprenant un longeron inférieur, une porte latérale et des moyens de limitation de l'intrusion de la porte au sein de l'habitacle du véhicule lors d'un choc latéral subi par le véhicule ;
- la figure 2 est une vue partielle en perspective du véhicule de la figure 1 ;
- la figure 3 est une vue schématique en coupe transversale du véhicule de la figure 1, pour laquelle les moyens de limitation occupent une position non déformée ;
- la figure 4 est une vue analogue à celle de la figure 3, pour laquelle les moyens de limitation occupent une position d'interposition lors d'un choc latéral subi par le véhicule ;
- la figure 5 est une vue partielle en perspective du longeron et des moyens de limitation du véhicule de la figure 2 ;
- la figure 6 est une vue partielle en perspective de la partie de la porte du véhicule de la figure 2, venant à être situé en regard du longeron de la figure 5 lorsque la porte occupe une position de fermeture.

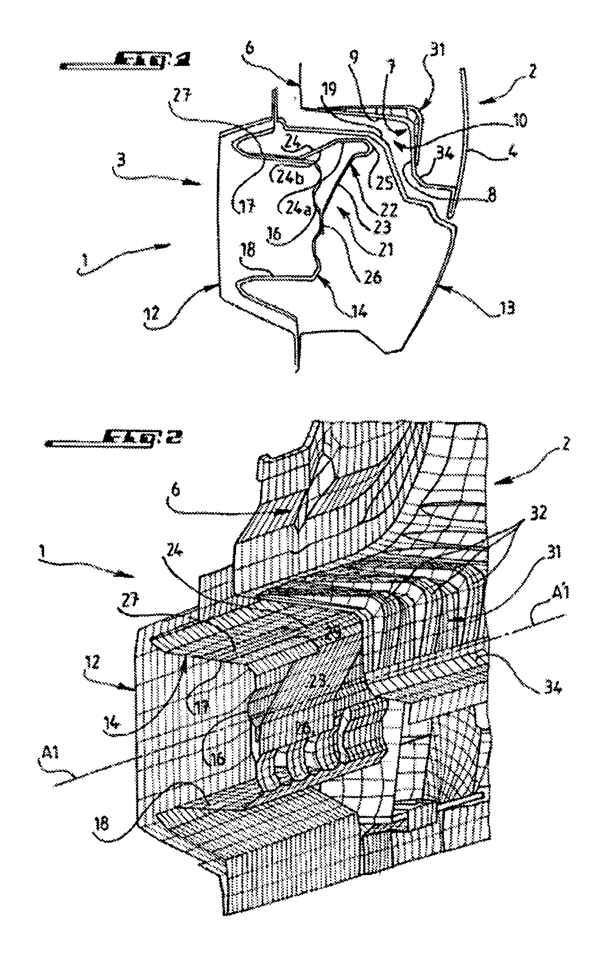

Le véhicule 1 représenté sur la figure 1, comprend une porte latérale 2, un longeron 3 s'étendant selon une direction principale Al - A'1 parallèle à l'axe longitudinal du véhicule, deux montants (non représentés) et une traverse supérieure (non illustrée), ces quatre derniers éléments définissant ensemble une ouverture latérale pouvant être fermée ou libérée par la porte 2.

Dans sa position de fermeture de l'ouverture, la porte 2 comprend une partie basse ou bas de porte 4 venant couvrir partiellement le longeron 3.

Plus précisément, le bas de porte 4 comprend une doublure interne 6 disposée du côté de l'habitacle du véhicule, pourvue d'un fond inférieur 7 définissant une paroi verticale 8 et une paroi sensiblement horizontale 9 formant un renfoncement ou cavité d'accueil 10 du longeron 3 du véhicule 1, et étant destinées à venir s'appliquer contre ce longeron 3 lorsque la porte 2 ferme son ouverture.

Le longeron 3 se présente sous la forme d'un profilé longitudinal réalisé par l'assemblage de trois pièces de tôlerie longitudinales que sont une plaque interne de fermeture 12, une peau externe 13 présentant une forme générale complémentaire de la cavité de réception 10 du bas de porte 4, et un renfort intérieur 14 constitué en un matériau plus rigide que la peau 13, interposé entre la plaque de fermeture 12 et la peau externe 13 et comprenant un panneau frontal 16 sensiblement vertical et deux panneaux supérieur 17 et inférieur 18, ces trois panneaux 16-18 définissant ensemble une section transversale en forme de U.

Dans la position de fermeture de la porte 2, le fond inférieur 7 de la porte 2 s'applique contre une portion supérieure correspondante 19 de la peau 13 du longeron 3 et définit avec cette peau 13 un interstice d'accueil de joints d'étanchéité (non représentés).

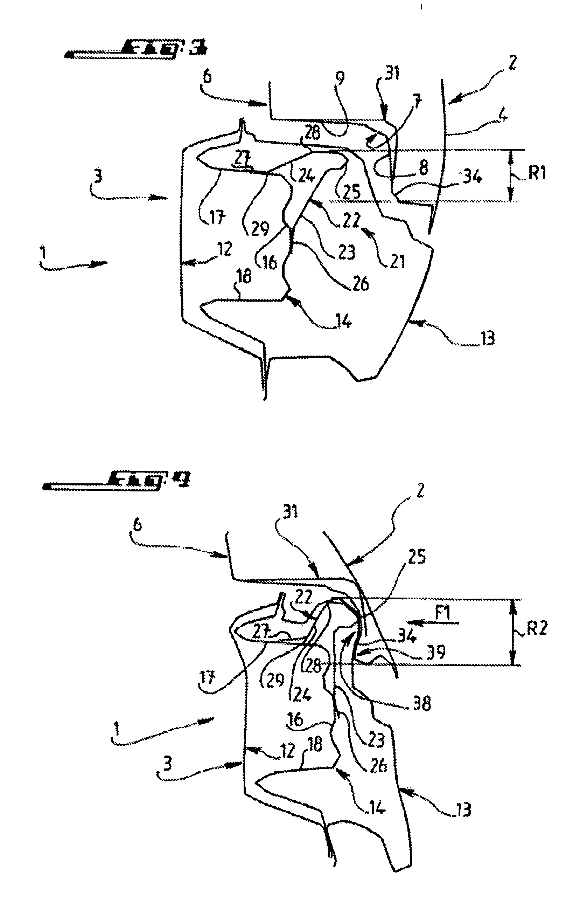

Lors d'un choc latéral subi par le véhicule, selon le sens repéré par F1 sur la figure 4, le bas de porte 4 s'écrase contre le longeron adjacent 3.

Afin d'éviter toute intrusion de la porte 2 à l'intérieure de l'ouverture, lors d'un tel choc, le véhicule 1 selon l'invention comprend des moyens de limitation de cette intrusion 21, se présentant sous la forme d'un profilé longitudinal 22 constitué en un matériau rigide, fixé au renfort 14 de longeron 3 et s'étendant entre ce renfort 14 et la peau 13 du longeron 3.

Ce profilé 22 est monté sur le longeron 3 de façon à pouvoir se déformer lors d'un choc latéral subi par le véhicule pour définir une zone de recouvrement avec la partie basse 4 de porte 2 suffisamment importante pour empêcher l'intrusion de la porte 2 à l'intérieur du véhicule.

A cet effet, ce profilé 22 comprend une paroi longitudinale de retenue 23, déformable d'une position initiale (figure 3) dans laquelle la paroi 23 s'étend selon un plan incliné vers la porte 2, formant avec le bas 4 de cette porte 2 un certain recouvrement latéral initial R1, à une position d'interposition (figure 4) dans laquelle la paroi de retenue 23 s'étend selon un plan sensiblement vertical et définit avec la partie basse 4 de la porte 2 un recouvrement latéral R2 supérieur au recouvrement initial R1 de l'état non déformé du profilé.

De plus, ce profilé 22 comprend une paroi longitudinale d'appui 24, servant à maintenir la paroi de retenue 23 dans sa position d'interposition durant le choc.

Ces parois 23, 24 définissent une section transversale en forme générale de V, dont le sommet forme une arête définissant une portion d'ancrage 25 pointant vers le fond 7 de la doublure 6 de porte 2 dans la position de fermeture de celle-ci, et destinée à venir se bloquer dans ce fond 7 lors du choc.

Plus précisément, comme représenté sur la figure 3, la portion d'ancrage 25 présente une section en forme générale de C définissant un crochet, s'étendant selon un plan sensiblement horizontal et dont la partie bombée fait face à la doublure 6 de porte 2.

En outre, le profilé comprend deux pattes longitudinales de fixation 26, 27 s'étendant respectivement dans le prolongement des parois de retenue 23 et d'appui 24 et étant respectivement fixées au panneau frontal 16 et au panneau supérieur 17 du longeron 3, par exemple par des points de soudure électrique 30.

De plus, la patte de fixation 27 définit avec la paroi de retenue 24 une section en forme générale de Z. Plus précisément, une branche d'extrémité du Z est constituée par la patte de fixation 27, l'autre branche d'extrémité est constituée par la portion 24a de la paroi d'appui 24 la plus proche de la paroi de retenue 23, la branche centrale du Z étant constituée par la portion 24b de la paroi d'appui 24 la plus éloignée de la paroi de retenue 23.

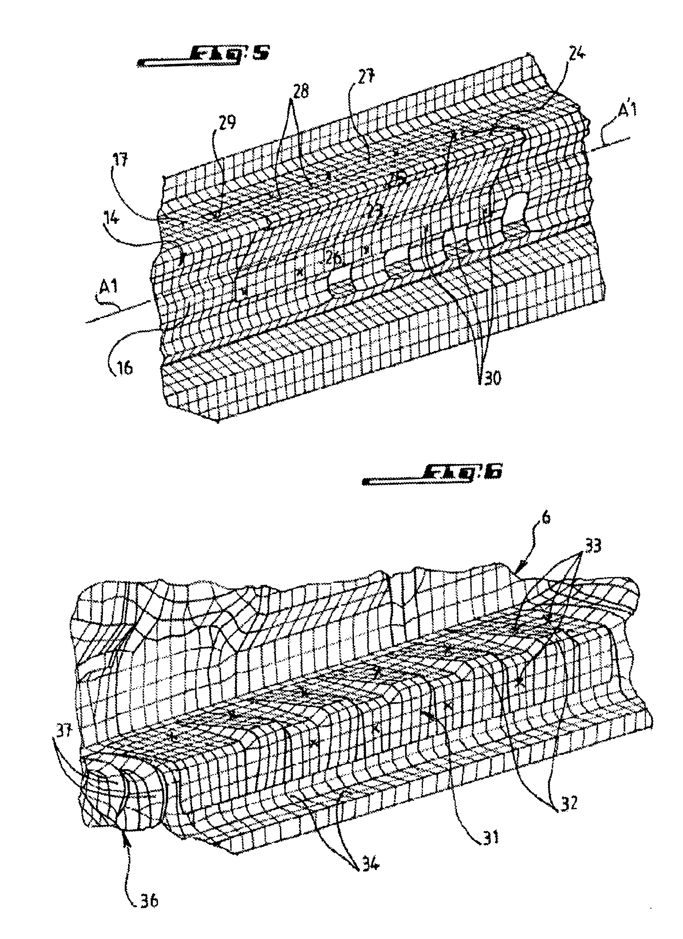

Il est à noter que les deux portions 24a, 24b de la paroi d'appui 24 sont séparées l'une de l'autre par une pliure d'articulation 28, mieux visible sur la figure 5, et que de la même façon, la patte de fixation 27 est séparée de la portion 24b de la paroi d'appui par une autre pliure d'articulation 29. Ces pliures d'articulation 28, 29 permettent la déformation de la paroi d'appui 24 selon une forme prédéfinie pour assurer le maintien de la paroi de retenue 23 dans sa position d'interposition.

D'autre part, le fond 7 de la doublure 6 de porte 2, recevant la portion d'ancrage 25 du profilé 22 lors d'un choc, est muni d'un renfort 31, constitué par une pièce de tôlerie épousant la forme à angle droit de ce fond 7, et pourvue de parties embouties 32 vers la façade extérieure de la porte 2, mieux visibles sur la figure 6.

La matériau constitutif de la pièce de renfort 31 est suffisamment rigide pour transmettre les efforts mécaniques générés par le choc latéral à l'ensemble profilé 22 et longeron 3, et permet de maintenir la perpendicularité du fond 7 de doublure 6 lors du choc.

Cette pièce de renfort 31 est avantageusement fixée à la doublure 6 de porte 2 par des points de soudure électrique 33 qui la maintiennent rigidement solidarisée à cette doublure 6 durant toute la durée du choc.

En outre, la partie de bas de porte 2 située en vis-à-vis de la paroi de retenue 23 du profilé 22 est pourvue d'une lame 34 constituée en un matériau moins rigide que le matériau constitutif du profilé 22 de façon à se déformer lors du choc en s'appliquant contre la paroi de retenue 23.

Avantageusement, les rayons 36 de porte 2 peuvent être munis d'emboutis 37 afin d'augmenter leur rigidité.

Suite à un choc latéral à haute vitesse subi par le véhicule, illustré sur la figure 4, la paroi verticale 8 du fond 7 de la partie basse 4 de porte 2 écrase le longeron 3 selon une direction sensiblement horizontale.

En conséquence, le mouvement de la paroi verticale renforcée 8 selon la flèche F1 entraîne la déformation de la paroi de retenue 23 depuis sa position initiale de la figure 3 jusqu'à sa position d'interposition de la figure 4, dans laquelle cette paroi 23 définit avec le longeron 3 un recouvrement porte - longeron supérieur à l'état non déformé du véhicule.

De plus, les parties du véhicule les moins rigides, c'est-à-dire la peau 13 de longeron 3 et la lame 36 du bas de porte 2 sont déformées dans le sens de la flèche F1, alors que le renfort 31 du bas de porte 2 conserve approximativement sa forme d'équerre.

De cette façon, le renfort 31 et la lame inférieure 36 définissent respectivement un logement de réception 38 et un étranglement de retenue de la portion d'ancrage 25 du profilé 22.

Dans le même temps, la peau 13 du longeron 3, poussée selon la flèche F1 par la paroi verticale renforcée 8 du bas de porte, vient au contact de la portion d'ancrage 25 qui se déforme et se replie sur la paroi de retenue sous-jacente 23 et se loge dans la cavité de réception 38 formée par le renfort 31 et la lame 36, provoquant ainsi un meilleur ancrage.

Par ailleurs, la longueur du profilé de limitation 22 ainsi que celle du fond 7 de porte 2 le recevant lors du choc latéral, sont choisies de façon à assurer une déformation du bas de porte la plus homogène possible. La longueur optimale du profilé 22 peut être déterminée par des simulations numériques de choc latéral.

L'invention telle que décrite ci-dessus, présente différents avantages parmi lesquels :
- l'augmentation du recouvrement latéral entre la porte et le longeron durant un choc latéral, supérieure à 50% par rapport aux recouvrements latéraux définis par des moyens de limitation usuels, diminuant en conséquence le risque d'intrusion de la porte au sein de l'habitacle du véhicule,
- les points de soudure électriques entre le profilé et le longeron d'une part, et entre le renfort et la doublure de porte d'autre part, assurent la liaison de ces éléments pendant toute la durée du choc.

## Revendications

1. Véhicule automobile comprenant un longeron inférieur (3) ayant une partie supérieure, couverte par le bas (4) d'une porte (2) du véhicule lorsque cette porte (2) est fermée et définissant avec le bas (4) de porte (2) une zone de recouvrement, le longeron (3) étant pourvu d'un profilé (22), dit de retenue de la porte (2), définissant au moins une face oblique (23) terminée par une arête (25) située en vis-à-vis du bas (4) de porte (2) lorsque cette porte (2) est fermée, de telle manière qu'un choc latéral (F1) appliqué sur la porte (2) tend à déformer le profilé (22) en rabattant la face oblique (23), le longeron (3) comprenant une peau externe (13) fermée par une plaque interne (12), un renfort intérieur (14) interposé entre la peau externe (13) et la plaque interne (12), **caractérisé en ce que** le profilé de retenue (22) est porté par le renfort intérieur (14) de sorte que la face oblique (23) est inclinée vers la porte (2) dans un état non déformé du profilé (22) dans lequel le profilé (22) forme avec le bas de la porte (2) un recouvrement latéral initial (R1), et que la face oblique (23) est destinée à être rabattue lors d'un choc latéral subi par le véhicule par la déformation du profilé (22) dans un plan sensiblement vertical de sorte que e profilé (22) définit alors avec le bas de la porte (2) un recouvrement latéral (R2) supérieur audit recouvrement latéral initial (R1).

2. Véhicule selon la revendication 1, dans lequel le profilé (22) présente en section transversale une forme en V, chaque branche (23, 24) du V ayant une extrémité (26, 27) fixée au renfort intérieur (14).

3. Véhicule selon la revendication 2, dans lequel l'arête (25) du profilé a, en section transversale, une forme de crochet.

4. Véhicule selon l'une des revendications 1 à 3, **caractérisé en ce que** le bas (4) de porte (2) comprend une cavité de réception (7) de l'arête (25) du profilé de retenue (22).

5. Véhicule selon la revendication 4, **caractérisé en ce que** la cavité de réception (7) comprend un renfort longitudinal (31) réalisé en un matériau sensiblement plus rigide que les matériaux constitutif du profilé (22) et du longeron (3), destiné à transmettre des efforts généré par un choc latéral (F1) subi par le véhicule à l'ensemble profilé (22) et longeron (3).

6. Véhicule selon la revendication 5, **caractérisé en ce que** le renfort (31) de la cavité (7) est constitué par une pièce de tôlerie définissant une zone angulaire de réception du profilé, cette pièce comprenant des parties embouties (32) permettant de maintenir l'ouverture de la zone angulaire lors d'un choc latéral (F1) subi par le véhicule.

7. Véhicule selon la des revendications 5 ou 6, **caractérisé en ce que** le bas (4) de porte (2) comprend une lame longitudinale (34) située en dessous du renfort (31) de la cavité (7), présentant une rigidité moindre que la rigidité du renfort (31), de façon à s'appliquer sous l'arête (25) du profilé (22) lors d'un choc latéral (F1) subi par le véhicule.

## Claims

1. Motor vehicle comprising a lower rail (3) having an upper part covered by the bottom (4) of a door (2) of the vehicle when this door (2) is closed and, together with the bottom (4) of the door (2), defining a region of overlap, the rail (3) being provided with a profile (22), referred to as a retaining profile of the door (2), defining at least an oblique face (23) ending in an edge (25) which is located opposite the bottom (4) of the door (2) when this door (2) is closed, in such a way that a lateral impact (F1) applied to the door (2) tends to deform the profile (22) by folding the oblique face (23), the rail (3) comprising an external skin (13) which is closed by an internal plate (12), an inner reinforcement (14) interposed between the external skin (13) and the internal plate (12), **characterised in that** the retaining profile (22) is carried by the inner reinforcement (14) in such a way that the oblique face (23) is inclined towards the door (2) when the profile (22) is in a non-deformed state, wherein the profile (22) and the bottom of the door (2) together form an initial lateral overlap (R1), and **in that** the oblique face (23) is intended to be folded in the event of a lateral impact experienced by the vehicle by the deformation of the profile (22) in a substantially vertical plane such that the profile (22) and the bottom of the door (2) then define a lateral overlap (R2) greater than said initial lateral overlap (R1).

2. Vehicle according to claim 1, wherein the profile (22) is V-shaped in cross-section, each branch (23, 24) of the V having an end (26, 27) which is fixed to the inner reinforcement (14).

3. Vehicle according to claim 2, wherein the edge (25) of the profile is hook-shaped in cross-section.

4. Vehicle according to any one of claims 1 to 3, **characterised in that** the bottom (4) of the door (2) comprises a cavity (7) for receiving the edge (25) of the retaining profile (22).

5. Vehicle according to claim 4, **characterised in that** the receiving cavity (7) comprises a longitudinal reinforcement (31), made of a material which is substantially more rigid that the materials forming the profile (22) and the rail (3), for transmitting forces generated by a lateral impact (F1) experienced by the vehicle to the profile (22) and rail (3) assembly.

6. Vehicle according to claim 5, **characterised in that** the reinforcement (31) of the cavity (7) consists of a sheet metal part defining an angular region for receiving the profile, this part comprising stamped portions (32) for maintaining the opening of the angular region in the event of a lateral impact (F1) experienced by the vehicle.

7. Vehicle according to either claim 5 or claim 6, **characterised in that** the bottom (4) of the door (2) comprises a longitudinal strip (34) located below the reinforcement (31) of the cavity (7) and having a rigidity which is less than the rigidity of the reinforcement (31), so as to be applied below the edge (25) of the profile (22) in the event of a lateral impact (F1) experienced by the vehicle.

## Patentansprüche

1. Kraftfahrzeug, umfassend einen unteren Längsträger (3) mit einem oberen Teil, der von dem Unterteil (4) einer Tür (2) des Fahrzeugs überdeckt ist, wenn diese Tür (2) geschlossen ist, und mit dem Unterteil (4) der Tür (2) einen Überdeckungsbereich festlegt, wobei der Längsträger (3) mit einem Profil (22), dem so genannten Halteprofil der Tür (2), versehen ist, das mindestens eine schräge Fläche (23) festlegt, die durch eine Kante (25) bestimmt wird, die dem Unterteil (4) der Tür (2) gegenüberliegt, wenn diese Tür (2) geschlossen ist, derart, dass ein seitlicher Stoß (F1), der auf die Tür (2) aufgebracht wird, dazu neigt, das Profil (22) zu verformen, indem die schräge Fläche (23) umgeklappt wird, wobei der Längsträger (3) eine außenliegende Haut (13) umfasst, die durch eine innere Platte (12) geschlossen ist, eine innenliegende Verstärkung (14), die zwischen der außenliegenden Haut (13) und der inneren Platte (12) eingelegt ist, **dadurch gekennzeichnet, dass** das Halteprofil (22) von der innenliegenden Verstärkung (14) getragen wird, derart, dass die schräge Fläche (23) in einem nicht verformten Zustand des Profils (22) in Richtung der Tür (2) geneigt ist, wobei das Profil (22) mit dem Unterteil der Tür (2) eine anfängliche seitliche Überdeckung (R1) bildet, und dass die schräge Fläche (23) dafür vorgesehen ist, bei einem seitlichen Stoß, den das Fahrzeug erleidet, durch die Verformung des Profils (22) in einer im Wesentlichen vertikalen Richtung umgeklappt zu werden, derart, dass das Profil (22) dann mit dem Unterteil der Tür (2) eine seitliche Überdeckung (R2) festlegt, die größer als die anfängliche seitliche Überdeckung (R1) ist.

2. Fahrzeug nach Anspruch 1, wobei das Profil (22) einen V-förmigen Querschnitt aufweist, wobei jeder Schenkel (23, 24) des V ein Ende (26, 27) hat, das an der innenliegenden Verstärkung (14) befestigt ist.

3. Fahrzeug nach Anspruch 2, wobei die Kante (25) des Profils, im Querschnitt, die Form eines Hakens hat.

4. Fahrzeug nach einem der Ansprüche 1 bis 3, **dadurch gekennzeichnet, dass** das Unterteil (4) der Tür (2) einen Hohlraum (7) für die Aufnahme der Kante (25) des Halteprofils (22) umfasst.

5. Fahrzeug nach Anspruch 4, **dadurch gekennzeichnet, dass** der Aufnahmehohlraum (7) eine längsgerichtete Verstärkung (31) umfasst, die aus einem Material realisiert ist, das im Wesentlichen steifer ist als das Material, aus dem das Profil (22) und der Längsträger (3) gebildet ist, die dafür vorgesehen ist, Kräfte, die von einem seitlichen Stoß (F1), den das Fahrzeug erleidet, erzeugt werden, auf die Anordnung aus Profil (22) und Längsträger (3) zu übertragen.

6. Fahrzeug nach Anspruch 5, **dadurch gekennzeichnet, dass** die Verstärkung (31) des Hohlraums (7) von einem Blechteil gebildet ist, das einen Winkelbereich für die Aufnahme des Profils festlegt, wobei dieses Teil tiefgezogene Teile (32) umfasst, die es ermöglichen, die Öffnung des Winkelbereichs bei einem seitlichen Stoß (F1), den das Fahrzeug erleidet, aufrecht zu erhalten.

7. Fahrzeug nach einem der Ansprüche 5 oder 6, **dadurch gekennzeichnet, dass** das Unterteil (4) der Tür (2) einen längsgerichteten Streifen (34) umfasst, der sich unterhalb der Verstärkung (31) des Hohlraums (7) befindet, der eine Steifigkeit aufweist, die geringer als die Steifigkeit der Verstärkung (31) ist, derart, dass er sich bei einem seitlichen Stoß (F1), den das Fahrzeug erleidet, unter die Kante (25) des Profils (22) anlegt.
